**Europäisches Patentamt**

**European Patent Office**

**Office européen des brevets**

(19)

(11) **EP 0 806 876 A2**

(12) **EUROPÄISCHE PATENTANMELDUNG**

(43) Veröffentlichungstag:
12.11.1997 Patentblatt 1997/46

(51) Int. Cl.$^6$: **H04N 9/64**

(21) Anmeldenummer: 97106865.5

(22) Anmeldetag: 25.04.1997

(84) Benannte Vertragsstaaten:
**DE FR GB IT**

(30) Priorität: **08.05.1996 DE 19618350**

(71) Anmelder:
**DEUTSCHE THOMSON-BRANDT GMBH**
**78048 Villingen-Schwenningen (DE)**

(72) Erfinder:
• **Hollmann, Thomas**
**78052 Villingen-Schwenningen (DE)**

• **Maier, Michael**
**78054 Villingen-Schwenningen (DE)**
• **Hirtz, Gangolf**
**78078 Niedereschach (DE)**

(74) Vertreter:
**Hartnack, Wolfgang, Dipl.-Ing.**
**Deutsche Thomson-Brandt GmbH**
**Patentabteilung**
**Göttinger Chaussee 76**
**30453 Hannover (DE)**

(54) **Verfahren und Schaltungsanordnung zum Unterscheiden zwischen Standard- und Nicht-Standard-FBAS-Signalen**

(57)    Für viele Signalverarbeitungen in TV-Empfängern ist es notwendig, die Art der Signalquelle zu kennen. Abhängig davon, ob es sich um eine normgerechte Quelle und damit um ein Standard-Signal oder um eine Nicht-Standard-Quelle (z.B. VCR) handelt, müssen mehrere Parameter eingestellt werden. Die erfindungsgemäße Schaltung ist in der Lage, in einem TV-Empfänger eine Aussage darüber zu machen, ob eine dem TV-Standard entsprechende Quelle vorliegt oder nicht. Dazu wird die Verkopplung des Farbträgers mit der Horizontalfrequenz untersucht und zwei unterschiedliche Kriterien (FSCFH,CCC) für die Entscheidung genutzt. Mit Hilfe der getroffenen Entscheidung ist die optimierte Einstellung von Parametern im Empfänger möglich. Desweiteren stellt die Schaltung für den Fall eines Standardsignals einen hochstabilen Abtasttakt ($f_{LL1}$) zur Verfügung, wie er z. B. bei der ColourPlus-Verarbeitung innerhalb des PALplus-Systems notwendig ist.

Fig. 2

EP 0 806 876 A2

## Beschreibung

Die Erfindung betrifft ein Verfahren und eine Schaltungsanordnung zum Unterscheiden zwischen Standard- und Nicht-Standard-FBAS-Signalen.

### Stand der Technik

Für viele Verfahren zur Signalverarbeitung in TV-Empfängern ist es notwendig, die Art der Signalquelle zu kennen. Abhängig davon, ob es sich um eine normgerechte Quelle und damit um ein Standard-Signal oder um eine Nicht-Standard-Quelle handelt, müssen mehrere Parameter eingestellt werden.

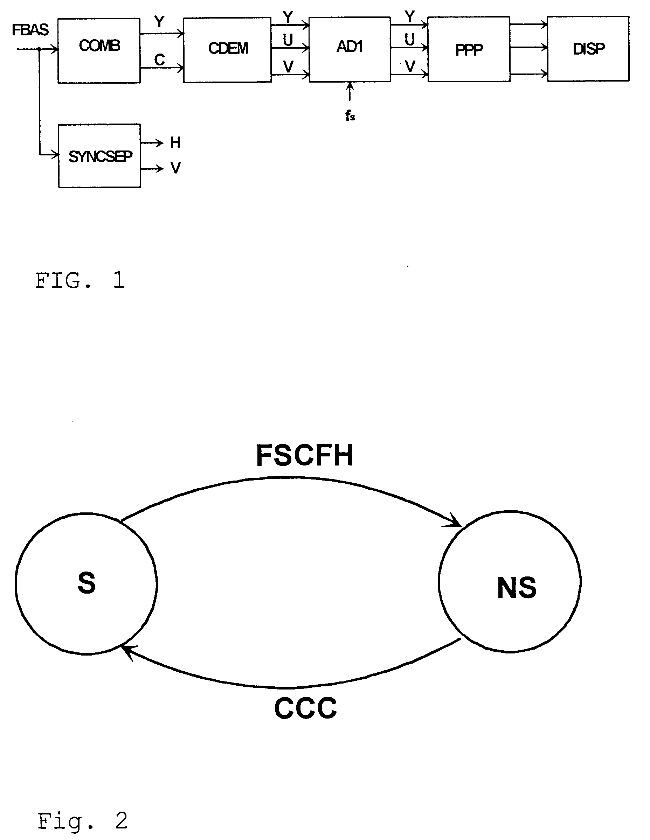

Figur 1 zeigt den typischen Aufbau eines TV-Empfängers. Die Zeitkonstante in der Synchronsignal-Abtrennung SYNCSEP sollte abhängig von der Quelle geschaltet werden. Handelt es sich bei der Quelle z.B. um einen Heim-Videorecorder, so daß Nicht-Standard-Signal vorliegt, so ist ein schnelles Einschwingen der PLL notwendig, um den Phasensprüngen des VCR-Signals folgen zu können. Handelt es sich um ein normgerechtes Signal ohne Phasensprünge ist eine langsame Zeitkonstante von Vorteil, da sie die Gewinnung der Synchronsignale rauschunempfindlich macht. Desweiteren sollte ein eventuell vorhandenes Kammfilter COMB abgeschaltet werden, sobald ein Videorecorder am Eingang vorliegt, da die Kammfilterfunktion nur bei einem normgerechten Signal sichergestellt ist. Das gleiche gilt für die ColourPlus-Verarbeitung, die innerhalb eines PALplus-Übertragungssystems eine saubere Trennung zwischen Luminanz und Chrominanz liefert. Auch diese Verarbeitung setzt ein normgerechtes Signal voraus und muß abgeschaltet werden sobald z. B. ein Videorecordersignal vorliegt.

Diese Betrachtungen zeigen, daß eine Erkennung von nicht normgerechten Eingangssignalen notwendig ist. Insbesondere ist es auch notwendig, einen Quellenwechsel in beide Richtungen zu erkennen, d.h. Standard- zu Nicht-Standard-Signal und umgekehrt.

### Erfindung

Der Erfindung liegt die Aufgabe zugrunde ein Verfahren und eine Schaltungsanordnung zum Unterscheiden zwischen Standard- und Nicht-Standard-FBAS-Signalen anzugeben. Diese Aufgabe wird durch das in Anspruch 1 angegebene Verfahren gelöst.

Der Erfindung liegt die weitere Aufgabe zugrunde, eine Schaltungsanordnung zur Anwendung des erfindungsgemäßen Verfahrens anzugeben. Diese Aufgabe wird durch die in Anspruch 6 angegebene Schaltungsanordnung gelöst.

Für PAL- bzw. NTSC-Systeme geben die folgenden Beziehungen den Zusammenhang zwischen der Horizontalfrequenz $f_H$ und der Farbträgerfrequenz $f_{SC}$ wieder:

$$f_{SC} = \left(\frac{1135}{4} + \frac{1}{625}\right) f_H \qquad \text{für PAL-Systeme}$$

$$f_{SC} = \frac{455}{2} f_H \qquad \text{für NTSC-Systeme}$$

Es gibt also eine feste Beziehung zwischen Farbträger- und Horizontalfrequenz. In einem Abtastsystem mit einem zeilenverkoppelten Abtasttakt $f_S$ gibt es darüber hinaus eine feste Anzahl von Bildpunkten pro Zeile. Geht man von einem System entsprechend CCIR 601 (Abtasttakt 13.5 MHz) aus, so sind dies 864 Bildpunkte pro Zeile für ein PAL-System ($f_S = 864\, f_H$) und 858 Bildpunkte pro Zeile für ein NTSC-System ($f_S = 858\, f_H$). Damit sind auch die Abtastfrequenz und die Farbträgerfrequenz fest aneinander gekoppelt.

$$\frac{f_{SC}}{f_S} = \frac{672 + \frac{10064}{16875}}{2048} \qquad \text{für PAL-Systeme}$$

$$\frac{f_{SC}}{f_S} = \frac{35}{132} \qquad \text{für NTSC-Systeme}$$

Dieser Zusammenhang ist die Grundlage für die Erkennung von Nicht-Standard-Signalen. Ein Signal, das diese mathematische Beziehung nicht einhält, wird als Nicht-Standard-Signal betrachtet.

Eine weitere Eigenschaft ergibt sich bei der Betrachtung der Phasenbeziehung des Farbträgers in aufeinander folgenden Halbbildern. Im folgenden soll die Betrachtung für 50 Hz PAL-Systeme durchgeführt werden. Das gleiche Prinzip läßt sich auch für NTSC-Systeme anwenden.

Der Farbträger erfährt von einer Zeile eines ersten Halbbildes zu einer 312 Zeilen entfernten Zeile des zweiten Halbbildes eine Phasendrehung von annähernd 180°. Addiert man z. B. den Farbträger in Zeile 59 und denjenigen in Zeile 371 auf, so löschen sich diese aus. Tastet man den Farbträger, der durch eine Farbträger-PLL aus dem FBAS-Signal gewonnen wurde, mit einem zeilenverkoppelten Takt ab, so löscht sich dieser nur aus, wenn das Eingangssignal eine normgerecht Kopplung zwischen der Farbträgerfrequenz und der Horizontalfrequenz aufweist. Dieses Verhalten kann auch zur Unterscheidung zwischen Standard- und Nicht-Standard-Signalen herangezogen werden.

Im Prinzip besteht daher das erfindungsgemäße Verfahren zum Unterscheiden zwischen Standard- und Nicht-Standard- FBAS-Signalen, darin, daß ein oder mehrere Unterscheidungskriterien, die auf einer Kopplung der Farbträgerfrequenz mit der Horizontalfrequenz beruhen, eingesetzt werden.

Hierbei ist es vorteilhaft, in Abhängigkeit davon, ob ein Standard- oder ein Nicht-Standard-FBAS-Signal angenommen wird, verschiedene Unterscheidungskriterien anzuwenden.

Bei der Annahme eines Nicht-Standard-Signals kann vorzugsweise nach einer Addition der Farbträger von aufeinanderfolgenden Halbbildern untersucht werden, ob die Summe der Farbträger kleiner als ein bestimmter Schwellwert ist.

Bei der Annahme eines Standard-Signals kann vorzugsweise ein erstes Horizontalsignal unter Ausnutzung der Kopplung der Horizontalfrequenz und der Farbträgerfrequenz generiert werden und ein zweites Horizontalsignal aus dem FBAS-Signal abgetrennt werden und überprüft werden, ob die beiden Horizontalsignale stabil zueinander sind.

Ferner kann durch Ausnutzung der Verkopplung von Farbträger- und Horizontalfrequenz bei Standardsignalen ein hochstabiler, zeilenverkoppelter Abtasttakt erzeugt werden.

Im Prinzip besteht die erfindungsgemäße Schaltungsanordnung zum Unterscheiden zwischen Standard- und Nicht-Standard-FBAS-Signalen, darin, daß in einer Auswertelogik eine oder mehrere Unterscheidungskriterien, die auf einer Kopplung der Farbträgerfrequenz mit der Horizontalfrequenz beruhen, angewendet werden.

Vorteilhaft wird hierbei für die Erkennung eines Nicht-Standard-Signals aus dem Fernseh-Signal ein erstes Horizontalsignal mittels einer Regelschleife unter Ausnutzung der Kopplung der Horizontalfrequenz und der Farbträgerfrequenz sowie ein zweites Horizontalsignal mit einer Abtrennschaltung generiert und in einer Auswertelogik ein Vergleich beider Signale durchgeführt.

Für die Erkennung eines Standard-Signals ist vorzugsweise ein Analog-Digital-Wandler zur Abgetastung des Farbträgers, ein Speicher zum Anspeichern eines Probesignal, ein Addierer zur Addition des gespeicherten Probesignals und des Probesignal einer Zeile eines späteren Halbbildes, ein Absolutwertbilder zur Bildung des Absolutwertes des Summensignals, ein Integrator zur Aufsummation der Absolutwerte und eine Schwellwertlogik zum Vergleich des aufsummierten Wertes mit einem vorgegebenen Schwellwert vorgesehen.

## Zeichnungen

Anhand der Zeichnungen werden Ausführungsbeispiele der Erfindung beschrieben. Diese zeigen in:

Fig. 1      die empfängerseitige Verarbeitung der im TV-Empfänger,

Fig. 2      ein Entscheidungsdiagramm mit Umschaltung zwischen Standard- und Nicht-Standardsignalen,

Fig. 3      eine erfindungsgemäße Anordnung zur Erkennung von Nicht-Standard-Quellen,

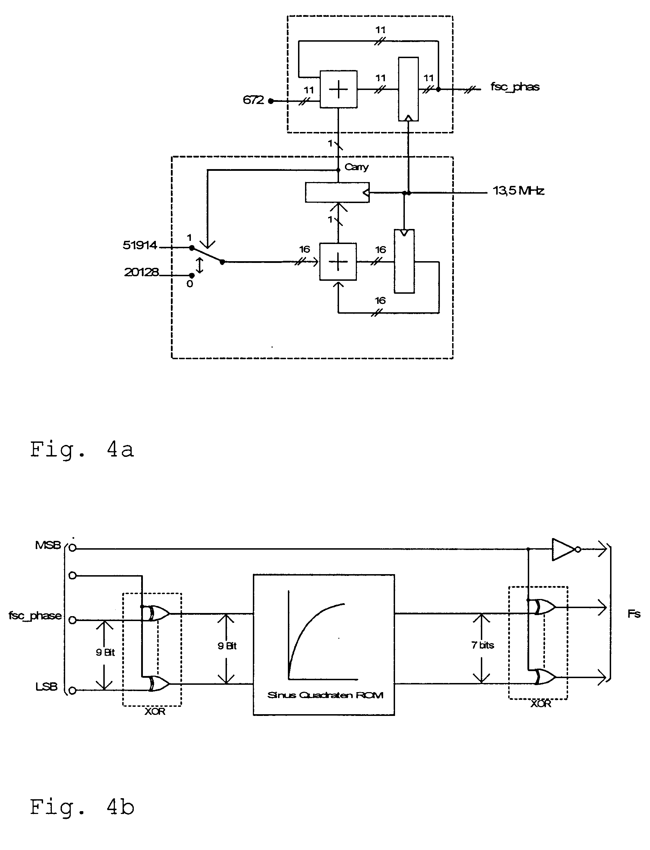

Fig. 4      eine Anordnung zur Farbträgergenerierung,

Fig. 5      eine Anordnung zur Untersuchung auf Farbträgerauslöschung.

## Ausführungs-Beispiele

Fig. 2 zeigt das Zustandsdiagramm für die Entscheidung Standard-Signal S oder Nicht-Standard-Signal NS. Ist die aktuelle Entscheidung "S", d.h. wird ein Standardsignal vermutet, so wird untersucht, ob eine feste Kopplung FSCFH zwischen $f_{SC}$ und $f_H$ besteht. Ist das nicht der Fall, wird die Entscheidung gefällt, daß es sich um ein Nicht-Standard-Signal NS handelt. Wurde entschieden, daß momentan ein Nicht-Standard-Signal vorliegt, wird die Farbträgerauslöschung CCC von einem Halbbild zum nächsten untersucht. Löscht sich der Farbträger aus, handelt es sich um ein Standard-Signal am Eingang des Detektors.

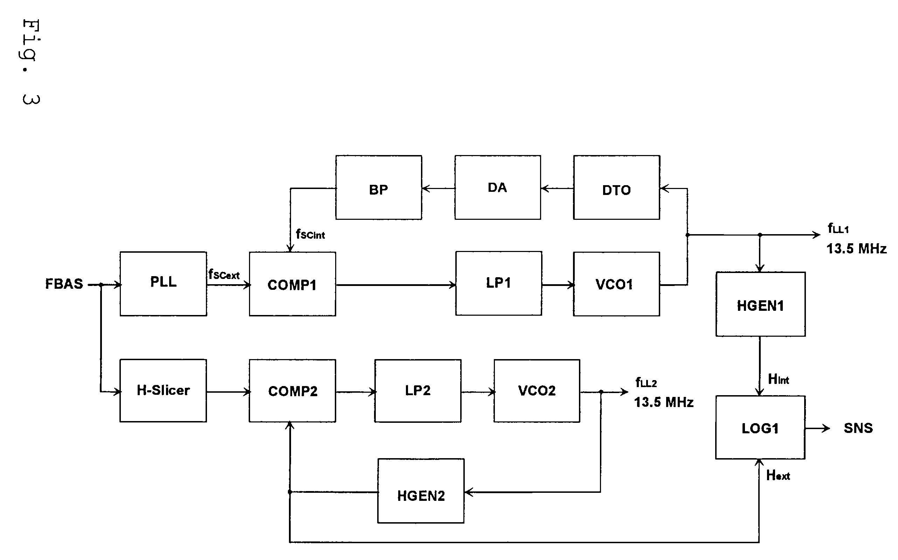

Fig. 3 zeigt das Gesamtsystem zur Erkennung von Standard- bzw. Nicht-Standard-Signalen. Für die Erkennung eines Nicht-Standard-Signals wird aus dem Fernseh-Signal FBAS mittels einer Chrominanz-PLL CPLL der Farbträger fscext zurückgewonnen. Dies ist immer, auch bei verrauschten Signalen mit hoher Stabilität möglich, da hierfür eine Quartz-PLL zum Einsatz kommt. Selbst bei Videorecordern ist der Farbträger stabil, da er mit Quartzstabilität im Recorder generiert wird. Ziel der nachfolgenden Schaltung ist die Generierung eines Horizontalsignals unter Ausnutzung der Kopplung der Horizontalfrequenz und der Farbträgerfrequenz.

Der Oszillator VCO1 (Voltage Controlled Oscillator) liefert einen Takt von 13.5 MHz. Mit diesem Takt wird ein DTO (Diskrete Time Oscillator) getaktet. Dieser generiert Abtastwerte des Farbträgers unter Berücksichtigung des mathematischen, theoretischen Zusammenhangs zwischen der zeilenverkoppelten Abtastfrequenz und dem Farbträger. Dazu kommt die in Bild 4 dargestellte Schaltung zum Einsatz (siehe BBC Report 2/1986 C. Clarke: "Colour encoding and decoding techniques for line-locked sampled PAL and NTSC television signals"). Der obere Teil liefert die Phase eines jeweiligen Abtastwertes während der untere unter Nutzung eines ROMs den richtigen Amplitudenwert für die Phase liefert. Wird der Ausgangswert des DTOs mit Hilfe eines Digital-Analog-Wandlers DA von digital nach analog gewandelt und mit einem Bandpaß BP, dessen Mittenfrequenz bei der Farbträgerfrequenz fsc liegt, nachgefiltert, so ergibt sich ein analoger Farbträger. In einem Phasenvergleicher COMP1 erfolgt ein Vergleich zwischen dem digital erzeugten und dem mittels der Farbträger-PLL aus dem Eingangssignal gewonnenen Farbträgers. Über ein Schleifenfilter wird die Regelschleife geschlossen. Diese Regelschleife erreicht, daß der extern erzeugte Farbträger $f_{SCext}$ mit dem internen $f_{SCint}$ in Phase ist. Das Taktsignal von VCO1 kann nun durch 864 geteilt werden, um ein H-frequentes Signal $H_{int}$ zu erhalten.

Gleichzeitig wird aus dem einkommenden FBAS-Signal mit einer standardmäßigen Abtrennschaltung ein Horizontalimpuls gewonnen, der dem H-Impuls des einkommenden Signals folgt. Ein Slicer mit nachfolgender PLL (include. VCO2) liefert diesen H-Impuls. Außerdem steht ein zeilenverkoppelter Takt $f_{LL2}$ von 13.5 MHz zur Verfügung. Für ein Standard-Signal, welches mathematisch exakt den Zusammenhang zwischen der Farbträgerfrequenz und der Horizontalfrequenz einhält, stehen der intern erzeugte Horizontalimpuls $H_{int}$ und der durch H-Abtrennung gewonnene externe Impuls $H_{ext}$ stabil gegeneinander. In einer Auswertelogik erfolgt die Untersuchung dieser beiden Signale auf Stabilität hin. Wandern sie gegeneinander, so wird entschieden, daß es sich um ein Nicht-Standard-Signal handelt. Der Takt $f_{LL1}$ kann dann nicht als zeilenverkoppelter Abtasttakt für eine A/D-Wandlung verwendet werden, da auch dieser relativ zum Zeilenraster wandert.

Solange ein Standardsignal vorliegt, stellt $f_{LL1}$ einen hochstabilen Takt dar, da er indirekt aus einem Quartzoszillator, dem Farbträgerquartzoszillator, gewonnen wird. Dieser Takt eignet sich daher z. B. sehr gut als Abtasttakt in einem PALplus-System. Dieses System stellt mit dem ColourPlus-Verfahren eine Möglichkeit zur sauberen Trennung von Luminanz und Chrominanz zur Verfügung. Allerdings ist dafür ein hochstabiler Takt notwendig.

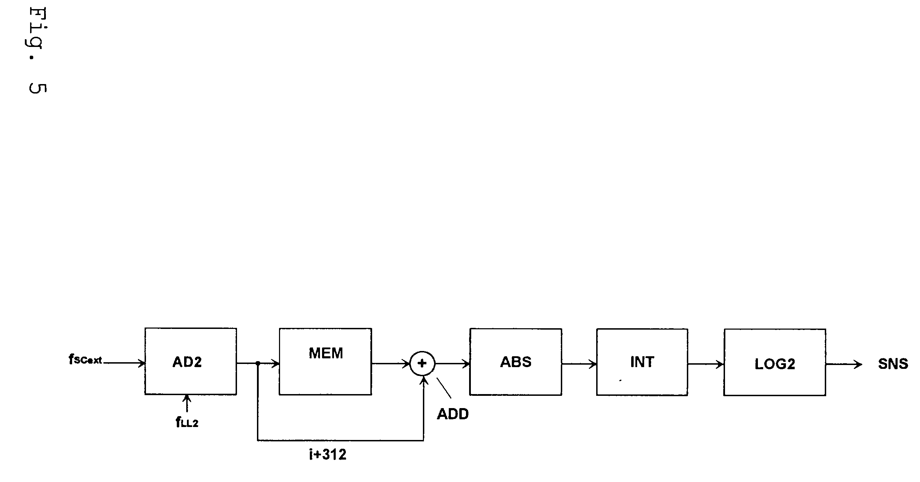

Bei der Detektion eines Standard-Signals dient der Takt $f_{LL2}$ nun als Abtasttakt. Er ist nicht so stabil wie $f_{LL1}$, da er nicht aus dem Farbträger abgeleitet worden ist. $f_{LL2}$ ist aber immer zeilenverkoppelt, auch bei Nicht-Standard-Signalen. Tastet man nun den Farbträger $f_{SCext}$ mit diesem Takt ab, so ist es möglich, dieses Signal daraufhin zu untersuchen, ob der Farbträger sich von einer Zeile des ersten Halbbildes zur entsprechenden Zeile des zweiten Halbbildes auslöscht. Die entsprechende Schaltung ist in Figur 5 dargestellt.

Der Farbträger wird durch den Anaolg-Digital-Wandler AD mit $f_{LL2}$ abgetastet und ein Probesignal davon in einem Speicher MEM abgespeichert. Bei dem Probesignal kann es sich um Teile einer Zeile handeln. Je größer das Probesignal ist, desto empfindlicher ist die Detektion. Während des nächsten Halbbildes, und zwar exakt 312 Zeilen später, erfolgt die Addition des gespeicherten Probesignals und des Probesignals der Zeile des einkommenden Halbbildes mit Hilfe eines Addierers ADD. Vom Ergebnis der Summation wird der Absolutwert in ABS gebildet und dieser für die Zeitdauer des Testsignals mit Hilfe eines Integrators INT aufsummiert. In einer Schwellwertlogik LOG2 wird dann überprüft, ob das Ergebnis einen vorgegebenen Schwellwert für die Dauer mehrerer Bilder unterschreitet. Ist dieses der Fall, so wird angenommen, daß es sich um ein Standardsignal handelt. Daraufhin wird wieder die oben beschriebene Nicht-Standard-Detektion in Betrieb genommen und der zeilenverkoppelte Abtasttakt auf der Basis des Farbträgers gewonnen.

Um dann wieder den Wechsel auf ein Nicht-Standard-Signal zu detektieren, muß wieder die entsprechende, oben beschriebene, Untersuchung der $f_H/f_{SC}$-Verkopplung genutzt werden. Würde weiterhin die Auslöschung des Farbträgers als Kriterium herangezogen, könnte kein Nicht-Standard-Signal erkannt werden, da der zeilenverkoppelte Abtasttakt aus dem Farbträger abgeleitet wurde und daher das Kriterium der Auslöschung zwischen den Halbbildern immer erfüllt ist.

Die Erfindung kann z. B. für Geräte zum Empfang von PALplus-Signalen, wie Fernsehgeräte, Videorekorder oder Multimediageräte, aber auch für Geräte zum Empfang von Farbfernsehsignalen gemäß einer Weiterentwicklung anderer Farbfernsehsysteme, wie z.B. NTSC, genutzt werden.

**Patentansprüche**

1. Verfahren zum Unterscheiden zwischen Standard- (S) und Nicht-Standard- (NS) FBAS-Signalen, **dadurch gekennzeichnet,** daß ein oder mehrere Unterscheidungskriterien (FSCFH,CCC), die auf einer Kopplung der Farbträgerfrequenz mit der Horizontalfrequenz beruhen, eingesetzt werden.

2. Verfahren nach Anspruch 1, **dadurch gekennzeichnet,** daß in Abhängigkeit davon, ob ein Standard- (S) oder ein Nicht-Standard (NS) -FBAS-Signal angenommen wird, verschiedene Unterscheidungskriterien angewendet werden.

3. Verfahren nach Anspruch 2, **dadurch gekennzeichnet,** daß bei der Annahme eines Nicht-Standard-Signals (NS) die Farbträger von aufeinanderfolgenden Halbbildern addiert werden und untersucht wird, ob die Summe der Farbträger kleiner als ein bestimmter Schwellwert ist.

4. Verfahren nach Anspruch 2 oder 3, **dadurch gekennzeichnet,** daß bei der Annahme eines Standard-Signals (S) ein erstes Horizontalsignal ($H_{int}$) unter Ausnutzung der Kopplung der Horizontalfrequenz und der Farbträgerfrequenz generiert wird und ein zweites Horizontalsignal ($H_{ext}$) aus dem FBAS-Signal abgetrennt wird und überprüft wird, ob die beiden Horizontalsignale stabil zueinander sind.

5. Verfahren nach einem der Ansprüche 2 bis 4, **dadurch gekennzeichnet,** daß durch Ausnutzung der Verkopplung von Farbträger- und Horizontalfrequenz bei Standardsignalen ein hochstabiler, zeilenverkoppelter Abtasttakt ($f_{LL1}$) erzeugt wird.

6. Schaltungsanordnung zum Unterscheiden zwischen Standard- (S) und Nicht-Standard- (NS) FBAS-Signalen, **dadurch gekennzeichnet,** daß in einer Auswertelogik (LOG1, LOG2) eine oder mehrere Unterscheidungskriterien, die auf einer Kopplung der Farbträgerfrequenz mit der Horizontalfrequenz beruhen, angewendet werden.

7. Schaltungsanordnung nach Anspruch 6, **dadurch**

**gekennzeichnet,** daß für die Erkennung eines Nicht-Standard-Signals (NS) aus dem Fernseh-Signal (FBAS) ein erstes Horizontalsignal ($H_{int}$) mittels einer Regelschleife unter Ausnutzung der Kopplung der Horizontalfrequenz und der Farbträgerfrequenz sowie ein zweites Horizontalsignal ($H_{ext}$) mit einer Abtrennschaltung generiert wird und in einer Auswertelogik (LOG1) beide Signale verglichen werden.

8. Schaltungsanordnung nach Anspruch 6, **dadurch gekennzeichnet,** daß für die Erkennung eines Standard-Signals (S) ein Anaolg-Digital-Wandler (AD) zur Abgetastung des Farbträgers ($f_{SCext}$), ein Speicher (MEM) zum Abspeichern eines Probesignal, ein Addierer (ADD) zur Addition des gespeicherten Probesignals und des Probesignal einer Zeile eines späteren Halbbildes, ein Absolutwertbilder (ABS) zur Bildung des Absolutwertes des Summensignals, ein Integrator (INT) zur Aufsummation der Absoltutwerte und eine Schwellwertlogik (LOG2) zum Vergleich des aufsummierten Wertes mit einem vorgegebenen Schwellwert vorgesehen ist.

FIG. 1

Fig. 2

Fig. 3

Fig. 4a

Fig. 4b

Fig. 5